# EUROPÄISCHE PATENTANMELDUNG

(11) **EP 4 191 839 A1**
(43) Veröffentlichungstag der Anmeldung: **07.06.2023**
(21) Anmeldenummer: 22207138.3
(22) Anmeldetag: 14.11.2022
(51) Int. Cl.: H02K 1/32, H02K 3/51, H02K 9/19

(54) **ROTOR FÜR EINE ELEKTRISCHE MASCHINE MIT EINEM AXIALEN KÜHLKANAL IN EINEM BLECHPAKET**

(30) Priorität: 06.12.2021 DE 102021213807
(71) Anmelder: Valeo eAutomotive Germany GmbH, 91056 Erlangen (DE)
(72) Erfinder: Siepker, Carsten, 97616 Bad Neustadt a.d.Saale (DE); Bach, Regina, 97616 Bad Neustadt a.d.Saale (DE); Wieczorek, Christoph, 97616 Bad Neustadt a.d.Saale (DE); Wolf, Nico, 97616 Bad Neustadt a.d.Saale (DE); Schlereth, Alexander, 97616 Bad Neustadt a.d.Saale (DE)
(74) Vertreter: Valeo Powertrain Systems

(57) **Zusammenfassung**

Rotor (1, 22) für eine elektrische Maschine (30), umfassend eine Rotorwelle (3), ein auf der Rotorwelle (3) angeordnetes Blechpaket (2) mit einer Mehrzahl gestapelter Elektrobleche, eine an einer Axialseite des Blechpakets (2) angeordnete erste Endplatte (4) mit entlang ihres Umfanges angeordneten radialen Vorsprüngen (6), eine an der gegenüberliegenden Axialseite des Blechpakets (2) angeordnete zweite Endplatte (5) mit entlang ihres Umfanges angeordneten radialen Vorsprüngen (7), mehrere Rotorwicklungen (8), die jeweils um einen Vorsprung (6) der ersten Endplatte (4) und einen axial gegenüberliegenden Vorsprung (7) der zweiten Endplatte (5) gewunden sind, einen in der Rotorwelle (3) verlaufenden zentralen Kühlkanal (10) zum Zuführen eines Kühlmittels, einen radialen Kühlkanal (11, 12) der von dem zentralen Kühlkanal (10) aus in der ersten Endplatte (4) verläuft, und einen axialen Kühlkanal (13), der von dem radialen Kühlkanal (12) aus in dem Blechpaket (2) an einer Außenseite des Blechpakets (2) entlang verläuft. Daneben werden eine elektrische Maschine (30) und ein Fahrzeug (29) mit einer derartigen elektrischen Maschine (30) beschrieben.

## Beschreibung

Die Erfindung betrifft einen Rotor für eine elektrische Maschine, eine elektrische Maschine mit einem Rotor und ein Fahrzeug mit einer elektrischen Maschine.

Der Rotor weist eine Rotorwelle und ein auf der Rotorwelle angeordnetes, aus gestapelten Elektroblechen gebildetes Blechpaket auf. Der Rotor gehört gemeinsam mit einem Stator und einem Gehäuse zu einer elektrischen Maschine.

Elektrische Maschinen dieser Art werden in zunehmendem Maße in elektrisch angetriebenen Fahrzeugen und Hybridfahrzeugen verwendet, überwiegend als Elektromotor für den Antrieb eines Rads oder einer Achse eines derartigen Fahrzeugs.

Ein solcher Elektromotor ist zumeist mechanisch mit einem Getriebe zur Drehzahlanpassung gekoppelt. Daneben ist der Elektromotor in der Regel elektrisch mit einem Wechselrichter gekoppelt, der aus einer von einer Batterie gelieferten Gleichspannung eine Wechselspannung für den Betrieb des Elektromotors erzeugt, beispielsweise eine mehrphasige Wechselspannung.

Es ist auch möglich, eine elektrische Maschine mit einem derartigen Rotor als Generator zur Rekuperation von Bewegungsenergie eines Fahrzeugs zu betreiben. Hierzu wird die Bewegungsenergie zunächst in elektrische Energie und dann in chemische Energie einer Fahrzeugbatterie umgewandelt.

Bei einer bestimmten Bauart von elektrisch erregten Synchronmotoren (EESM) besitzt der Rotor Rotorwicklungen, die mit Gleichstrom gespeist werden, um ein magnetisches Erregerfeld zu erzeugen. Wenn durch Statorwicklungen eines zugehörigen Stators ein Drehfeld erzeugt wird, bewirkt das eine Kraftwirkung auf den Rotor, sodass dieser synchron zum Statordrehfeld rotiert.

Die Rotorwicklungen werden dabei allerdings stark erwärmt, sodass eine Kühlung erforderlich ist. Die Kühlung kann beispielsweise durch Aufsprühen von Öl auf die Axialseiten des Rotors erfolgen. Allerdings ist diese Art der Kühlung nur oberflächlich und deshalb wenig effektiv.

Der Erfindung liegt daher die Aufgabe zugrunde, einen Rotor für eine elektrische Maschine anzugeben, der während des Betriebs besser gekühlt werden kann.

Zur Lösung dieser Aufgabe ist ein Rotor mit den Merkmalen des Anspruchs 1 vorgesehen.

Der erfindungsgemäße Rotor umfasst eine an einer Axialseite des Blechpakets angeordnete erste Endplatte mit entlang ihres Umfanges angeordneten radialen Vorsprüngen, eine an der gegenüberliegenden Axialseite des Blechpakets angeordnete zweite Endplatte mit entlang ihres Umfanges angeordneten radialen Vorsprüngen, mehrere Rotorwicklungen, die jeweils um einen Vorsprung der ersten Endplatte und einen axial gegenüberliegenden Vorsprung der zweiten Endplatte gewunden sind, einen in der Rotorwelle verlaufenden zentralen Kühlkanal zum Zuführen eines Kühlmittels, einen radialen Kühlkanal, der von dem zentralen Kühlkanal aus in der ersten Endplatte verläuft, und einen axialen Kühlkanal, der von dem radialen Kühlkanal aus in dem Blechpaket an einer Außenseite des Blechpakets entlang verläuft.

Die Erfindung beruht auf der Erkenntnis, dass eine verbesserte Kühlung erzielt werden kann, indem das Kühlmittel den Rotorwicklungen über einen radialen Kühlkanal und weiter über einen axialen (axial verlaufenden) Kühlkanal zugeführt wird, der an einer Außenseite des Blechpakets entlang verläuft. Die Rotorwicklungen können auf diese Weise über ihre gesamte axiale Länge gekühlt werden. Im Vergleich zu einem herkömmlichen Rotor, bei dem lediglich Öl auf Axialseiten des Rotors gesprüht wird, kann der erfindungsgemäße Rotor dadurch wesentlich besser und homogener gekühlt werden.

Dass der axiale Kühlkanal in dem Blechpaket an der Außenseite des Blechpakets entlang verläuft, kann beinhalten, dass der axiale Kühlkanal in einer Vertiefung der Außenseite verläuft oder von der Außenseite etwas beabstandet beziehungsweise zurückgesetzt ist, so dass der Kühlkanal von dem Blechpaket umschlossen wird. Die Größe des Abstandes hängt unter anderem von den konstruktiven Gegebenheiten ab, insbesondere vom verfügbaren Bauraum.

Anstelle nur eines radialen (beziehungsweise radial verlaufenden) Kühlkanals, der von dem zentralen Kühlkanal aus in der ersten Endplatte verläuft und von dem aus ein axialer Kühlkanal in dem Blechpaket verläuft, kann der Rotor auch mehrere solche radialen Kühlkanäle aufweisen, die jeweils von dem zentralen Kühlkanal aus verlaufen und von denen jeweils ein anderer axialer Kühlkanal in dem Blechpaket ( an dessen Außenseite entlang) verläuft.

Die entlang ihres Umfanges angeordneten radialen Vorsprünge einer Endplatte können auch als "Zähne" oder "Plattenfortsätze" bezeichnet werden und dienen unter anderem zum Halten der Rotorwicklungen in einer bestimmten Position.

Eine bevorzugte Ausgestaltung des erfindungsgemäßen Rotors sieht vor, dass der radiale Kühlkanal kurvenförmig ausgebildet ist oder mehrere in der ersten Endplatte parallel zueinander verlaufende Kühlkanalabschnitte aufweist. Ein auf diese Weise verlängerter Kühlkanal kann eine größere Wärmemenge abführen.

Bei dem erfindungsgemäßen Rotor ist es auch möglich, dass der radiale Kühlkanal in Axialrichtung innen von dem Blechpaket begrenzt wird. Bei dieser Ausgestaltung kann eine Axialseite des Blechpakets durch den radialen Kühlkanal besonders gut gekühlt werden und die Herstellung des radialen Kühlkanals ist besonders einfach.

Eine bevorzugte Weiterbildung des erfindungsgemäßen Rotors sieht vor, dass der radiale Kühlkanal zwei radiale Kühlkanalabschnitte und einen axialen

Kühlkanalabschnitt aufweist, welcher die radialen Kühlkanalabschnitte miteinander verbindet. Diese Ausgestaltung ermöglicht es, dass ein Teil des radialen Kühlkanals, nämlich der axiale Kühlkanalabschnitt, in dem Blechpaket verläuft, sodass das Blechpaket besser gekühlt werden kann. Es ist auch möglich, dass der radiale Kühlkanal mehr als zwei radiale Kühlkanalabschnitte und mehrere axiale Kühlkanalabschnitte aufweist. Insbesondere kann die Anzahl der radialen Kühlkanalabschnitte Eins größer sein als die Anzahl der axialen Kühlkanalabschnitte des radialen Kühlkanals.

Vorzugsweise weist der axiale Kühlkanal einen am Wicklungskopf einer Rotorwicklung angeordneten Auslass auf. Das Kühlmittel kann den Rotor durch den Auslass verlassen und anschließend über einen Kühlkreislauf dem zentralen Kühlkanal wieder zugeführt werden. Der Auslass kann entweder radial oder axial an dem Blechpaket angeordnet sein.

Bei dem erfindungsgemäßen Rotor kann es ferner vorgesehen sein, dass der axiale Kühlkanal nach radial außen von einem das Blechpaket umgebenden Rotormantel begrenzt wird. Dazu kann der axiale Kühlkanal in einer Vertiefung der Außenseite des Blechpakets verlaufen, beispielsweise in einer Nut. Ein solcher axialer Kühlkanal kann besonders einfach hergestellt werden.

Eine weitere bevorzugte Variante des erfindungsgemäßen Rotors sieht vor, dass ein weiterer radialer Kühlkanal vorhanden ist, der von dem zentralen Kühlkanal aus in der zweiten Endplatte verläuft, sowie ein weiterer axialer Kühlkanal, der von dem weiteren radialen Kühlkanal aus in dem Blechpaket an einer Außenseite des Blechpakets entlang verläuft. Damit kann eine größere Menge an Kühlmittel durch den erfindungsgemäßen Rotor gepumpt werden, wodurch die Kühlleistung vergrößert wird.

In diesem Fall kann es vorgesehen sein, dass die beiden axialen Kühlkanäle in demselben Vorsprung oder in zueinander benachbarten Vorsprüngen des Blechpakets verlaufen. Derartige Vorsprünge können jeweils zwischen zwei axial gegenüberliegenden Vorsprüngen der Endplatten ausgebildet sein.

Die beiden Endplatten des erfindungsgemäßen Rotors können jeweils Aluminium hergestellt sein und/oder eine elektrisch isolierende Außenschicht aufweisen. Insbesondere können die beiden Endplatten aus einer Aluminiumlegierung hergestellt sein.

Daneben betrifft die Erfindung eine elektrische Maschine mit einem Rotor der beschriebenen Art und einem Stator, der den Rotor umgibt und gegenüber dem der Rotor drehbar ist. Der Stator kann ein weiteres Blechpaket (Statorpaket) aufweisen, das aus gestapelten Elektroblechen gebildet ist. Daneben kann der Stator Wicklungen elektrischer Leiter besitzen, zum Beispiel in Form von Spulenwicklungen oder Flachdrahtwicklungen.

Ferner betrifft die Erfindung ein Fahrzeug mit einer derartigen elektrischen Maschine, die zum Antreiben des Fahrzeugs vorgesehen ist. Die Maschine kann insbesondere ein Rad oder eine Achse des Fahrzeugs antreiben.

Die Erfindung wird nachfolgend anhand von Ausführungsbeispielen unter Bezugnahme auf die Figuren erläutert. Die Figuren sind schematische Darstellungen und zeigen:
- Fig. 1: eine geschnittene Seitenansicht eines erfindungsgemäßen Rotors gemäß einem ersten Ausführungsbeispiel,
- Fig. 2: einen Schnitt entlang der Linie II-II von Figur 1,
- Fig. 3: eine geschnittene Seitenansicht eines erfindungsgemäßen Rotors gemäß einem zweiten Ausführungsbeispiel,
- Fig. 4: einen Schnitt entlang der Linie IV-IV von Figur 3, und
- Fig. 5: ein erfindungsgemäßes Fahrzeug mit einer elektrischen Maschine mit dem Rotor.

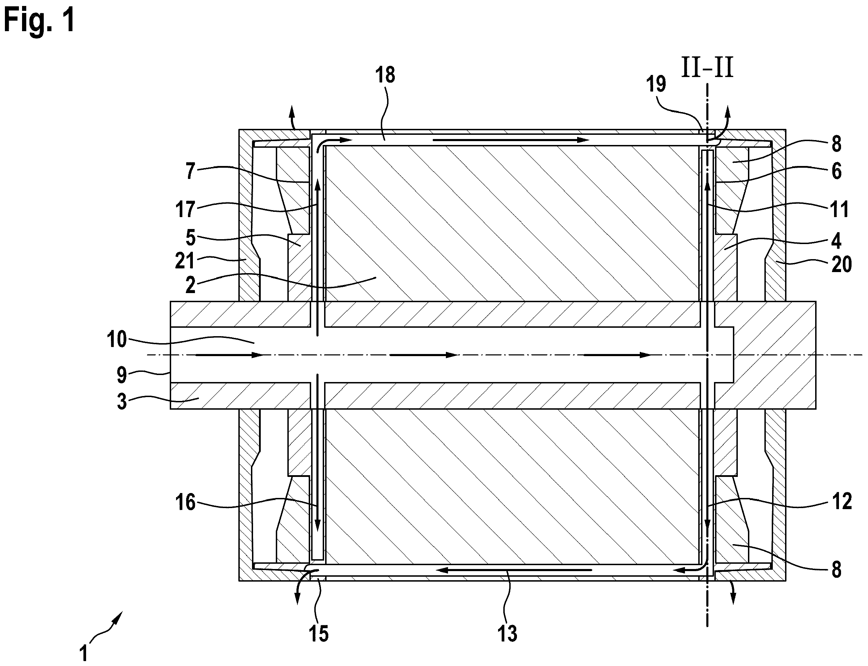

Der in Figur 1 in einer geschnittenen Seitenansicht gezeigte Rotor 1 ist für eine elektrische Maschine vorgesehen, die zum Antreiben eines Fahrzeugs eingesetzt wird. Der Rotor 1 umfasst ein aus gestapelten Elektroblechen gebildetes zylinderförmiges Blechpaket 2, das eine Rotorwelle 3 form- und/oder kraftschlüssig umschließt. Bei den Elektroblechen kann es sich um identisch ausgebildete Stanzteile handeln.

An einer ersten Axialseite des Blechpakets 2 befindet sich eine erste Endplatte 4 und an der gegenüberliegenden zweiten Axialseite des Blechpakets 2 befindet sich eine zweite Endplatte 5. Die Endplatten 4, 5 besitzen radiale Vorsprünge 6, 7 (auch "Plattenfortsätze"), um die mehrere Rotorwicklungen 8 gewunden sind. Beide Endplatten 4, 5 weisen jeweils einen Aluminiumkern auf, der mit Kunststoff umspritzt ist. Außerdem weist der Rotor 1 zwei topfförmige Endkappen 20, 21 auf, die von der Rotorwelle 3 durchsetzt sind und die Endkappen 4, 5 axial abdecken.

Die Rotorwelle 3 ist hohl ausgebildet und weist an ihrer in Figur 1 linken Axialseite einen Einlass 9 für Kühlmittel auf, das unter anderem Öl enthalten kann. Ein zentraler Kühlkanal 10 erstreckt sich von dem Einlass 9 axial bis zum gegenüberliegenden Ende der Rotorwelle 3. Der Einlass 9 und der zentrale Kühlkanal 10 sind Bestandteile eines Kühlmittelkreislaufs, in dem das Kühlmittel zirkuliert. Von dem Ende des zentralen Kühlkanals 10 erstreckt sich ein radialer Kühlkanal 11 in der ersten Endplatte 4, wobei der radiale Kühlkanal 11 durch den radialen Vorsprung 6 der ersten Endplatte 4 verläuft. Der radiale Kühlkanal 11 wird hier von der ersten Endplatte 4 umschlossen. Alternativ dazu könnte der radiale Kühlkanal nach axial innen von dem Blechpaket begrenzt sein. Der radiale Kühlkanal 11 mündet an der Außenseite des Blechpakets 2 in einen axialen Kühlkanal, der in Figur 1 nicht zu sehen ist.

Zusätzlich zu dem radialen Kühlkanal 11 verläuft in der ersten Endplatte 4 durch einen radialen Vorsprung ein weiterer von der Rotorwelle 3 abzweigender radialer Kühlkanal 12, der bezogen auf die Umfangsrichtung um 180° gegenüber dem radialen Kühlkanal 11 versetzt ist. Der radiale Kühlkanal 12 mündet an der Außenseite des Blechpakets 2 in einen axialen Kühlkanal 13. Der axiale Kühlkanal 13 verläuft in dem Blechpaket 2 an dessen Außenseite entlang, wobei er von dem Blechpaket 2 umschlossen wird. Am entgegengesetzten, in Figur 1 linken Ende des Blechpakets 2 besitzt der axiale Kühlkanal 13 einen axialen Auslass 15, durch den Kühlmittel ausströmen und dann durch eine Aussparung (nicht gezeigt) einer Endkappe 21 radial aus dem Rotor 1 austreten kann.

In der Nähe des Einlasses 9 zweigen von der hohlen Rotorwelle 3 weitere radiale Kühlkanäle 16, 17 ab, die in der zweiten Endplatte 5 beziehungsweise deren Vorsprüngen verlaufen und ebenfalls bezogen auf die Umfangsrichtung um 180° zueinander versetzt sind. An den in Figur 1 oberen radialen Kühlkanal 17 schließt sich ein in dem Blechpaket 2 verlaufender axialer Kühlkanal 18 an, an dessen Ende sich ein axialer Auslass 19 befindet. Das Kühlmittel kann durch den axialen Kühlkanal 18 in umgekehrter Richtung wie durch den axialen Kühlkanal 13 strömen, an dessen Ende ausströmen und danach durch eine Aussparung (nicht gezeigt) einer Endkappe 20 radial aus dem Rotor 1 austreten. An den radialen Kühlkanal 17 schließt sich ebenfalls ein in dem Blechpaket 2 (an dessen Außenseite entlang) verlaufender axialer Kühlkanal an, der aber in Figur 1 nicht zu sehen ist.

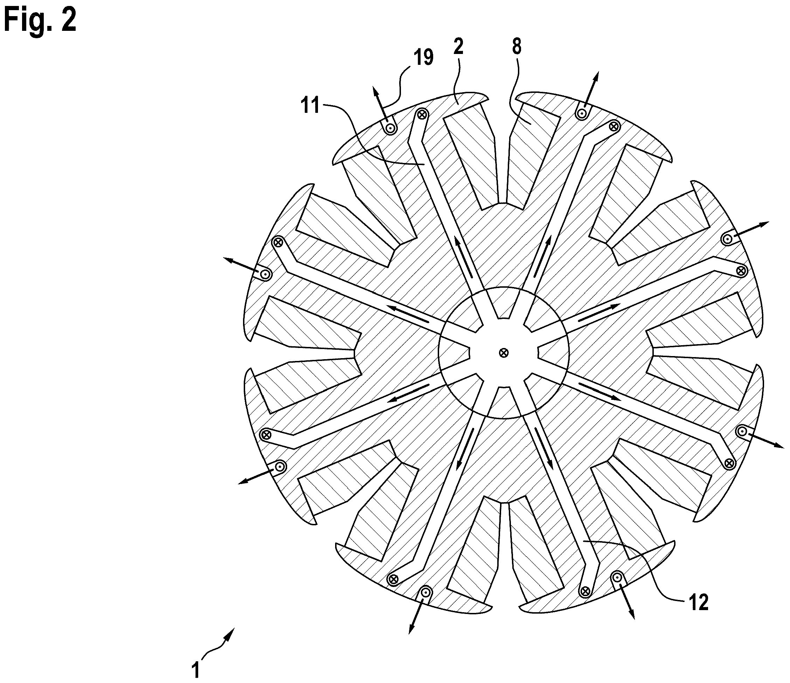

Figur 2 zeigt einen Schnitt entlang der Linie II-II von Figur 1. In den Figuren wird die Strömungsrichtung symbolisch durch Pfeile dargestellt. Zusätzlich bezeichnet ein kleiner Kreis mit Kreuz in die Zeichnungsebene strömendes Kühlmittel, ein kleiner Kreis mit Punkt bezeichnet aus der Zeichnungsebene strömendes Kühlmittel.

Man erkennt in Figur 2, dass in der Rotorwelle 3 insgesamt acht radiale Kühlkanäle 11, 12 von dem zentralen Kühlkanal 10 abzweigen, die jeweils in der ersten Endplatte 4 verlaufen. Insbesondere verlaufen die radialen Kühlkanäle 11, 12 jeweils in einem Vorsprung der ersten Endplatte 4 und damit in einer Rotorwicklung 8. Daneben sind auch Auslässe 19 dargestellt, die sich jeweils an dem Ende eines axialen Kühlkanals 18 befinden.

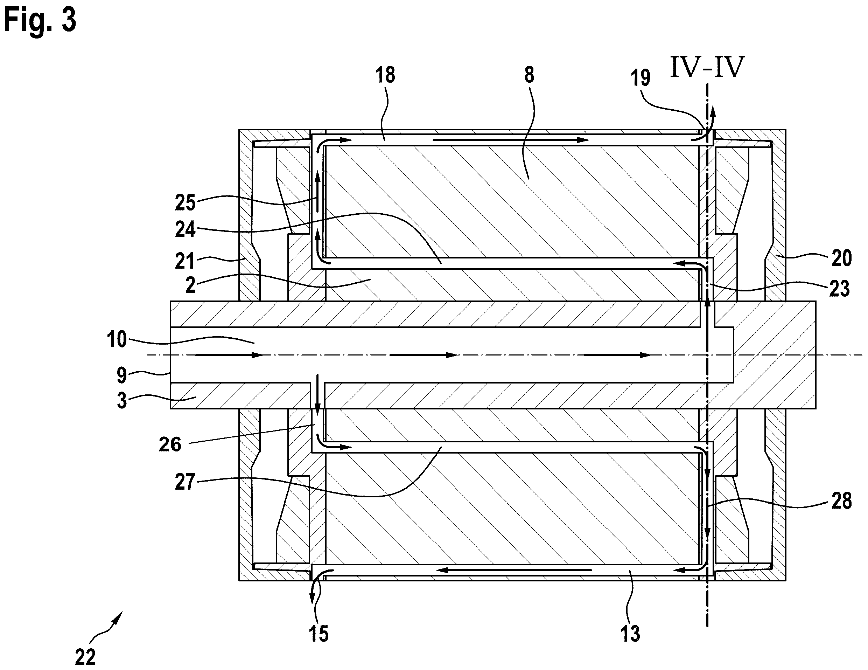

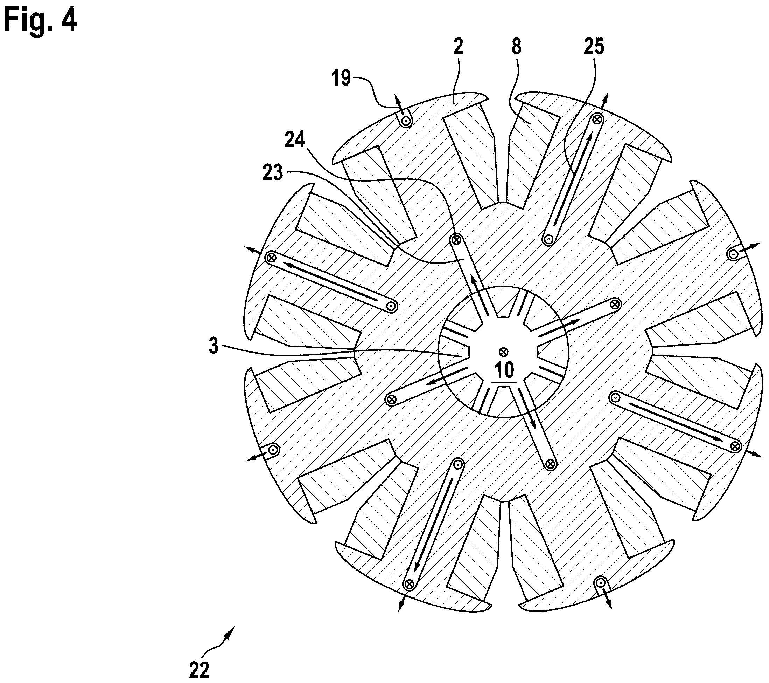

Die Figuren 3 und 4 sind ähnliche Ansichten wie die Figuren 1 und 2, die ein zweites Ausführungsbeispiel eines erfindungsgemäßen Rotors 22 in einer geschnittenen Seitenansicht beziehungsweise Schnittansicht entlang der Linie IV-IV zeigen. Diejenigen Komponenten, die mit Komponenten des ersten Ausführungsbeispiels übereinstimmen, werden an dieser Stelle nicht nochmals im Detail erläutert.

In Übereinstimmung mit dem ersten Ausführungsbeispiel weist der Rotor 22 eine Rotorwelle 3 mit einem zentralen Kühlkanal 10 auf. Von dort zweigt ein radialer Kühlkanalabschnitt 23 ab, der in einen axialen Kühlkanalabschnitt 24 übergeht. Daran schließt sich ein weiterer radialer Kühlkanalabschnitt 25 an, der in einen axialen Kühlkanal 18 mündet, der sich bis zu einem radialen Auslass 19 erstreckt. Der radiale Kühlkanalabschnitt 23, der axiale Kühlkanalabschnitt 24 und der radiale Kühlkanalabschnitt 25 bilden gemeinsam einen radialen Kühlkanal.

Im unteren Teil ist ein weiterer radialer Kühlkanal dargestellt, der in der Nähe des Einlasses 9 von der Rotorwelle 3 radial abzweigt. Der weitere radiale Kühlkanal weist einen radialen Kühlkanalabschnitt 26, einen axialen Kühlkanalabschnitt 27 und einen radialen Kühlkanalabschnitt 28 auf. Der weitere radiale Kühlkanal mündet in einen axialen Kühlkanal 13, in der sich bis zu einem radialen Auslass 15 erstreckt.

Die genannten radialen Kühlkanalabschnitte 23, 25, 26, 28 verlaufen in den Endplatten 4, 5 während die genannten axialen Kühlkanalabschnitte 24, 27 im Blechpaket 2 verlaufen.

In Figur 4 sind vier radial von der Rotorwelle 3 abzweigende radiale Kühlkanalabschnitte 23, 26 dargestellt, die jeweils um 90° zueinander versetzt sind. Dazwischen sind weitere vier radial verlaufende Kühlkanalabschnitte 25, 28 sichtbar, die jeweils in einen anderen axialen Kühlkanal 13, 18 münden. Die axialen Kühlkanäle 13 mit einer ersten Strömungsrichtung und die axialen Kühlkanäle 18 mit einer entgegengesetzten zweiten Strömungsrichtung sind entlang des Rotorumfanges abwechselnd angeordnet, womit eine besonders gleichmäßig und wirksame Kühlung ermöglicht wird.

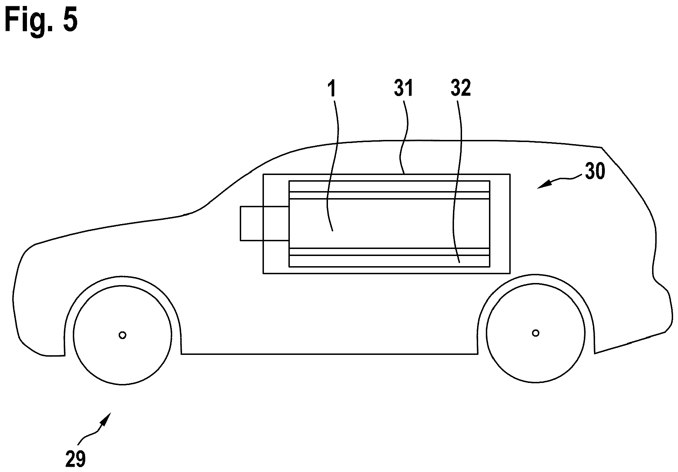

Figur 5 zeigt schematisch ein Fahrzeug 29 mit einer elektrischen Maschine 30, die zum Antreiben des Fahrzeugs 29 dient. Die elektrische Maschine 30 weist ein Gehäuse 31 auf, in dem der Rotor 1 und ein Stator 32 aufgenommen sind, der den Rotor 1 umgibt.

### Bezugszeichenliste

- 1: Rotor
- 2: Blechpaket
- 3: Rotorwelle
- 4: erste Endplatte
- 5: zweite Endplatte
- 6: Vorsprung
- 7: Vorsprung
- 8: Rotorwicklung
- 9: Einlass
- 10: zentraler Kühlkanal
- 11: radialer Kühlkanal
- 12: radialer Kühlkanal
- 13: axialer Kühlkanal
- 14: Rotormantel
- 15: Auslass
- 16: radialer Kühlkanal
- 17: radialer Kühlkanal
- 18: axialer Kühlkanal
- 19: Auslass
- 20: Endkappe
- 21: Endkappe
- 22: Rotor
- 23: radialer Kühlkanalabschnitt
- 24: axialer Kühlkanalabschnitt
- 25: radialer Kühlkanalabschnitt
- 26: radialer Kühlkanalabschnitt
- 27: axialer Kühlkanalabschnitt
- 28: radialer Kühlkanalabschnitt
- 29: Fahrzeug
- 30: elektrische Maschine
- 31: Gehäuse
- 32: Stator

## Patentansprüche

1. Rotor (1, 22) für eine elektrische Maschine (30), umfassend:
- eine Rotorwelle (3),
- ein auf der Rotorwelle (3) angeordnetes Blechpaket (2) mit einer Mehrzahl gestapelter Elektrobleche,
- eine an einer Axialseite des Blechpakets (2) angeordnete erste Endplatte (4) mit entlang ihres Umfanges angeordneten radialen Vorsprüngen (6),
- eine an der gegenüberliegenden Axialseite des Blechpakets (2) angeordnete zweite Endplatte (5) mit entlang ihres Umfanges angeordneten radialen Vorsprüngen (7),
- mehrere Rotorwicklungen (8), die jeweils um einen Vorsprung (6) der ersten Endplatte (4) und einen axial gegenüberliegenden Vorsprung (7) der zweiten Endplatte (5) gewunden sind,
- einen in der Rotorwelle (3) verlaufenden zentralen Kühlkanal (10) zum Zuführen eines Kühlmittels,
- einen radialen Kühlkanal (11, 12) der von dem zentralen Kühlkanal (10) aus in der ersten Endplatte (4) verläuft, und
- einen axialen Kühlkanal (13), der von dem radialen Kühlkanal (12) aus in dem Blechpaket (2) an einer Außenseite des Blechpakets (2) entlang verläuft.

2. Rotor nach Anspruch 1, wobei der radiale Kühlkanal (11, 12) kurvenförmig ausgebildet ist oder mehrere in der ersten Endplatte (4) parallel zueinander verlaufende Kühlkanalabschnitte aufweist.

3. Rotor nach Anspruch 1 oder 2, wobei der radiale Kühlkanal (11, 12) in Axialrichtung innen von dem Blechpaket (2) begrenzt wird.

4. Rotor nach einem der vorangehenden Ansprüche, wobei der radiale Kühlkanal zwei radiale Kühlkanalabschnitte (23, 25, 26, 28) und einen axialen Kühlkanalabschnitt (24, 27) aufweist, welcher die radialen Kühlkanalabschnitte (23, 25, 26, 28) miteinander verbindet.

5. Rotor nach einem der vorangehenden Ansprüche, wobei der axiale Kühlkanal (13, 18) einen am Wicklungskopf einer Rotorwicklung (8) angeordneten Auslass (15, 19) aufweist.

6. Rotor nach Anspruch 5, wobei der Auslass (15, 19) radial oder axial an dem Blechpaket (2) angeordnet ist.

7. Rotor nach einem der vorangehenden Ansprüche, wobei der axiale Kühlkanal (13, 18) nach radial außen von einem das Blechpaket (2) umgebenden Rotormantel (14) begrenzt wird.

8. Rotor nach einem der vorangehenden Ansprüche, mit einem weiteren radialen Kühlkanal (17), der von dem zentralen Kühlkanal (10) aus in der zweiten Endplatte (5) verläuft, und einem weiteren axialen Kühlkanal (18), der von dem weiteren radialen Kühlkanal (17) aus in dem Blechpaket (2) an einer Außenseite des Blechpakets (2) entlang verläuft.

9. Rotor nach Anspruch 8, wobei die beiden axialen Kühlkanäle (13, 18) in demselben Vorsprung oder in zueinander benachbarten Vorsprüngen des Blechpakets (2) verlaufen.

10. Rotor nach einem der vorangehenden Ansprüche, wobei die beiden Endplatten (4, 5) jeweils Aluminium und/oder eine elektrisch isolierende Außenschicht aufweisen.

11. Elektrische Maschine (30), mit einem Rotor (1, 22) nach einem der Ansprüche 1 bis 10 und einem den Rotor (1, 22) umgebenden Stator (32).

12. Fahrzeug (29) mit einer elektrischen Maschine (30) nach Anspruch 11, die zum Antreiben des Fahrzeugs (29) vorgesehen ist.
